Europäisches Patentamt

European Patent Office

Office européen des brevets

(19)

(11) Veröffentlichungsnummer : **0 175 637**
**B1**

(12) **EUROPÄISCHE PATENTSCHRIFT**

(45) Veröffentlichungstag der Patentschrift :
04.05.88

(21) Anmeldenummer : 85730112.1

(22) Anmeldetag : 27.08.85

(51) Int. Cl.⁴ : **H 02 G   5/06, H 01 R   4/60,**
   **F 16 L 25/00**

(54) Stromführende Schraubverbindung zwischen zwei rohrförmigen Leitern einer elektrischen Anlage, insbesondere einer metallgekapselten Hochspannungsschaltanlage.

(30) Priorität : 11.09.84 DE 3433757

(43) Veröffentlichungstag der Anmeldung :
26.03.86 Patentblatt 86/13

(45) Bekanntmachung des Hinweises auf die Patenterteilung : 04.05.88 Patentblatt 88/18

(84) Benannte Vertragsstaaten :
CH DE LI SE

(56) Entgegenhaltungen :
DE-A- 2 336 478
DE-C-   422 052
DE-U- 7 139 088
FR-A- 1 377 087
US-A- 4 363 505

(73) Patentinhaber : Siemens Aktiengesellschaft Berlin und München
Wittelsbacherplatz 2
D-8000 München 2 (DE)

(72) Erfinder : Lorenz, Dieter, Dipl.-Ing.
Gärtnerstrasse 1 B
D-1000 Berlin 45 (DE)
Erfinder : Olsen, Willi, Dipl.-Ing. (FH)
Am Laubwald 3
D-1000 Berlin 13 (DE)

EP 0 175 637 B1

## Beschreibung

Die Erfindung bezieht sich auf eine stromführende Schraubverbindung zwischen zwei rohrförmigen Leitern einer elektrischen Anlage, insbesondere einer metallgekapselten Hochspannungsschaltanlage, mit einem flüssigen oder gasförmigen, isolierenden Medium höherer dielektrischer Festigkeit als Luft bei Atmosphärendruck, die radial gerichtete Schrauben und eine rohrförmige Abschirmung aufweist, wobei die Schraubenköpfe innerhalb der Außenfläche der Abschirmung angeordnet sind.

Eine derartige Schraubverbindung ist aus dem DE-GM 71 39 088 bekannt. Bei metallgekapselten, insbesondere druckgasisolierten Hochspannungsschaltanlagen bzw. Hochspannungsleitungen ergibt sich das Problem, die rohrförmigen elektrischen Leiter in Längsrichtung untereinander zu verbinden, wobei die Verbindungsstelle dielektrisch abgeschirmt werden muß, damit keine Verzerrungen des elektrischen Feldes auftreten. Bei der bekannten Schraubverbindung sind die rohrförmigen Leiter mit winkelförmigen Endstücken versehen, die von rohrförmigen Teilen umgeben sind, die übereinander greifend die Abschirmung bilden. Die eigentliche stromführende Verbindung erfolgt über ein im Innern dieser Abschirmung angeordnetes flexibles Stromband, daß mit radial gerichteten Schrauben jeweils an den winkelförmigen Endstücken der rohrförmigen Leiter angeschraubt ist. Die Schrauben liegen vollkommen innerhalb der durch die rohrförmigen Teile gebildeten Abschirmung. Bei solchen Schraubverbindungen mit innenliegendem Stromband und gesonderten Abschirmelementen müssen die Abschirmungen einseitig mit dem Leitern verbunden und gegeneinander isoliert sein, um parallele Strompfade zu vermeiden. Dies ist in Hinblick auf die Isolationsfestigkeit des Systems bei bestimmten Betriebszuständen von Nachteil. Die Endstücke werden bei der bekannten Anordnung an die Leiterenden angeschweißt. Da die Abschirmung diese Schweißnähte nicht abdeckt müssen diese sehr sorgfältig ausgeführt werden und erfordern insbesondere zur Vergleichmäßigung des elektrischen Feldes ein Nachschleifen der Nahtstellen.

Der Erfindung liegt die Aufgabe zugrunde, die Verbindung zweier rohrförmiger Leiter einer metallgekapselten Hochspannungsschaltanlage so auszubilden, daß sie die vorbeschriebenen Nachteile vermeidet und auf einfacher Weise auch auf Baustellen herstellbar ist, sowie eine gute Abschirmung der Verbindungsstelle ergibt.

Zur Lösung dieser Aufgabe ist eine stromführende Schraubverbindung der eingangs beschriebenen Art so ausgebildet, daß die Abschirmung sich in Längsrichtung über die Enden der beiden Leiter, die Stoßstelle zwischen ihnen überdeckend, erstreckt und daß die Abschirmung mit jeden Leiter über Schrauben verbunden ist, die innerhalb eines Bereiches von màximal 180° des Umfanges der Abschirmung liegen und deren Köpfe sich innerhalb der Wandung der Abschirmung befinden.

Bei der durch die Erfindung gegebenen Schraubverbindung bildet die rohrförmige Abschirmung ein stromführendes Zwischenstück, welches die Enden der miteinander zu verbindenen Leiter hülsenartig überdeckt und die radial gerichteten Schrauben der Verbindung aufnimmt. Da sich deren Köpfe aber innerhalb der Wandung der Abschirmung befinden, verzerren sie das elektrische Feld nicht, sind aber trotzdem in leichter Weise von außen her zugänglich. Durch die besondere Anordnung der Schrauben innerhalb eines Bereiches von maximal 180° des Umfanges der Abschirmung wird mit Sicherheit einseitig eine genügende Anzahl von Kontaktpunkten zwischen den aneinanderliegenden Zylinderflächen der Abschirmung und des Leiters geschaffen, ohne daß es notwendig ist, die Abschirmung bei der Verschraubung wesentlich zu verformen. Dadurch erhält man definierte Anpreßkläfte der Abschirmung an die Leiter.

Bei der Herstellung der Schraubverbindung auf der Baustelle kann die Abschirmung als Bohrlehre für die erforderlichen Radialbohrungen verwendet werden. Außerdem brauchen die Leiter nur auf die gewünschte Länge abgesägt zu werden, eine Bearbeitung der Stirnflächen ist nicht erforderlich.

Der Außendurchmesser der Abschirmung ist so gewählt, daß die Stromtragfähigkeit der Schraubenverbindung gewährt ist und daß außerdem die Wandstärke genügend groß ist, um die Schraubenköpfe aufzunehmen. Dabei können auch Leiter mit unterschiedlichen Außendurchmessern miteinander über die Abschirmung verbunden werden. Auch ein eventueller Mittenversatz kann ausgeglichen werden. Weiterhin kann die Abschirmung über den gesamten Umfang die gleiche Länge aufweisen, d. h. eine zylindrische Hülse bilden. Sie kann aber auch in den Umfangsbereichen, die keine Schrauben aufweisen, kleinere Längen haben, so daß die Abschirmung längs des Umfanges unterschiedliche Längen hat. Dadurch kann Gewicht und Material gespart werden.

Die mit der Schraubenverbindung vereinigten rohrförmigen Leiter können einen massiven oder einen hohlzylindrischen Querschnitt aufweisen. Ist dann die Wandstärke der miteinander zu verbindenen Leiter verhältnismäßig schwach, kann es zweckmäßig sein, besondere leistenförmige Gegenstücke vorzusehen, welche die Gewindebohrungen für die Schrauben aufweisen. Diese können bereits in der Werkstatt vorgefertigt sein. Sie werden dann entsprechend im Innern der Leiter angeordnet und können mit einer dem Leiterinnendurchmesser entsprechenden Krümmung versehen sein. Diese Gegenstücke können auch ihrerseits über Schrauben am Leiter befestigt sein. Dabei liegen die Schrauben der Schraubverbindung jeweils zwischen den Befestigungsschrauben der Gegenstücke.

Im folgenden sei die Erfindung noch anhand der Figuren 1 bis 6 der Zeichnung näher erläutert.

Die Figuren 1, 3, und 5 zeigen jeweils einen Längsschnitt durch die Schraubenverbindung gemäß der Erfindung.

In den Figuren 2, 4, und 6 ist jeweils ein Radialschnitt entsprechend der Schnittlinie im zugehörigen Längsschnitt dargestellt.

In einer metallgekapselten, mit SF$_6$ druckgasisolierten Hochspannungsleitung, einem sogenannten Rohrleiter, sind rohrförmige Leiter, z. B. aus Kupfer oder Aluminium oder entsprechenden Legierungen, verwendet. Diese Leiter werden von nicht dargestellten Isolatoren auf Abstand zu der ebenfalls nicht dargestellten geerdeten Kapselung aus Metall gehalten. Die Leiter werden im allgemeinen auf der Baustelle zu der gewünschten Länge zusammengefügt, die mehrere hundert Meter betragen kann.

Die Verbindung zwischen den Enden der rohrförmigen Leiter erfolgt jeweils mit Hilfe einer Schraubverbindung gemäß der Erfindung. In den Figuren mit den abgewandelten Ausführungsbeispielen sind jeweils für gleiche Teile gleiche Bezugszeichen verwendet.

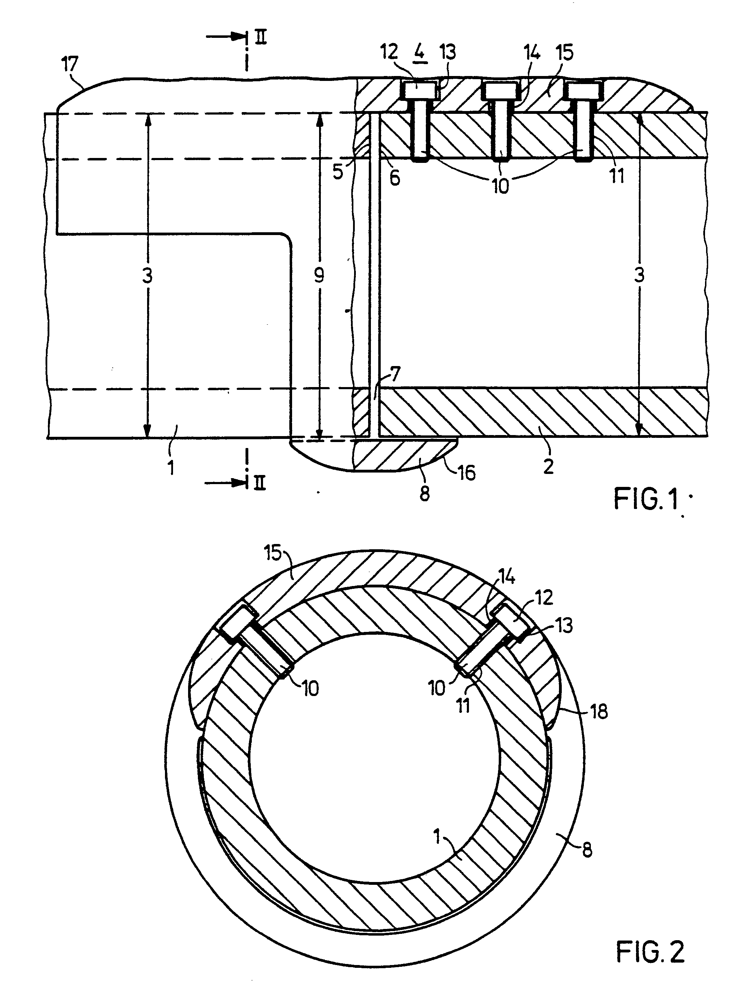

Bei dem Ausführungsbeispiel nach den Figuren 1 und 2 werden zwei hohle rohrförmige Leiter 1 und 2 mit gleichem Außendurchmesser 3, angedeutet durch Pfeile, über die Schraubverbindung 4 miteinander stromführend verbunden. Die unbearbeiteten, abgeschnittenen Stirnseiten 5 bzw. 6 der Leiter 1, 2 stehen einander mit geringem Abstand gegenüber und bilden somit die Stoßstelle 7. Über beide Enden der Leiter 1, 2 ist eine rohrförmige Abschirmung 8 wie eine Hülse geschoben, deren Innendurchmesser 9, angedeutet durch Pfeile, etwas größer als der Außendurchmesser 3 der Leiter 1, 2 ist.

Die Längserstreckung der Abschirmung 8 ist in der oberen Hälfte größer als in der unteren, da in der oberen Hälfte jeweils mehrere in Längsrichtung hintereinander liegende Schrauben 10 vorgesehen sind, mit denen die Abschirmung 8 an den Leitern 1, 2 angeschraubt ist. Dazu sind die Enden der Leiter 1, 2 mit entsprechenden Gewindebohrungen 11 versehen. Längs des Umfanges der Abschirmung 8 gesehen liegen die Schrauben 10 in einem Bereich von 90°, damit eine genügende Anzahl von Kontaktpunkten zwischen den aneinanderliegenden zylindrischen Flächen der Abschirmung 8 und der Leiter 1 bzw. 2 geschaffen wird.

Die Köpfe 12 der Schrauben 10 liegen innerhalb der Abschirmung 8 in Ansenkungen 13 von Bohrungen 14, die genügend tief sind, so daß die Köpfe 12 der Schrauben 10 innerhalb der Wandung 15 der Abschirmung 8 liegen und somit keine nachteilige Verzerrung des elektrischen Feldes hervorrufen können. Zur weiteren Vergleichmäßigung des elektrischen Feldes sind alle Außenkanten 16, 17 in Längsrichtung abgerundet. Das gleiche gilt für die Außenkante 18 in Umfangsrichtung und die Kanten der Ansenkungen 13. Aus Gründen der Ersparnis von Gewicht und Material ist nämlich in der unteren Hälfte die Längserstreckung der Abschirmung 8 lediglich so groß gewählt, daß eine genügende Abschirmung der Stoßstelle 7 erzielt wird.

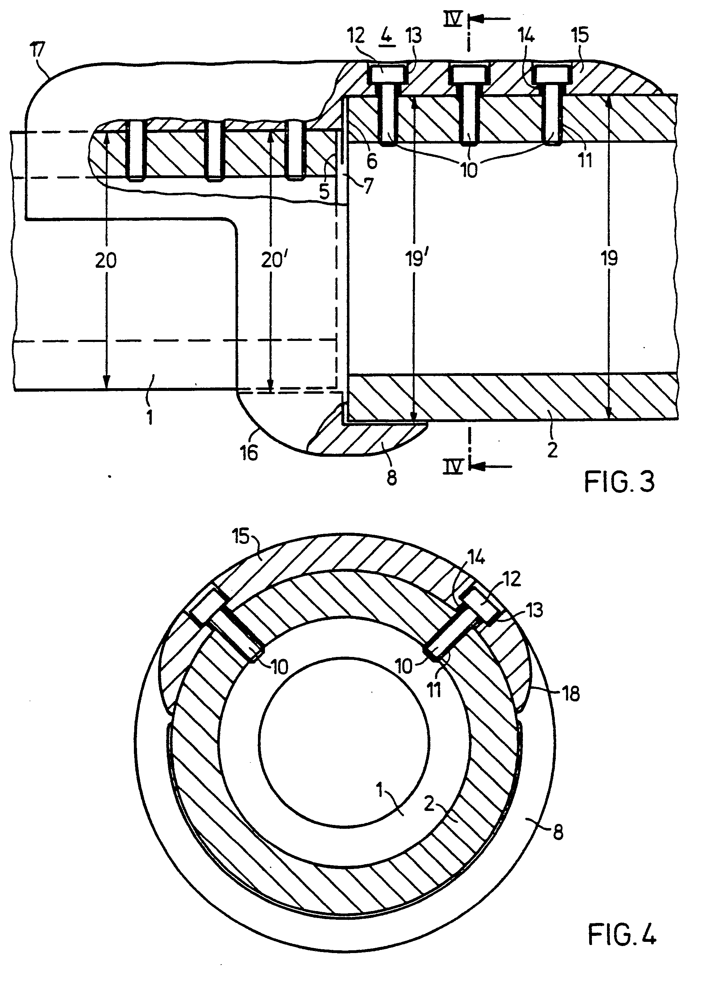

Die Figuren 3 und 4 zeigen eine Schraubverbindung 4 zwischen zwei Leitern 1 und 2 mit unterschiedlich großen Außendurchmessern 19, 20. Entsprechend weist die Abschirmung 8 in Längsrichtung zwei unterschiedliche, etwas größere Innendurchmesser 19' bzw. 20' auf. Ihre Wandstärke ist genügend groß gewählt, um trotz des Ausgleichs der Durchmesserdifferenz (19'-20') noch genügend stark zu sein, um die Köpfe 12 der Schrauben 10 aufzunehmen. Im Bereich des Leiters 1 mit dem kleineren Außendurchmesser 20 haben die Schrauben 10 eine entsprechend größere Länge. Die Abmessungen der Abschirmung 8 werden so gewählt, daß die Stoßstelle 7 zwischen beiden Leitern 1, 2 angenähert in der Mitte der Abschirmung 8 liegt.

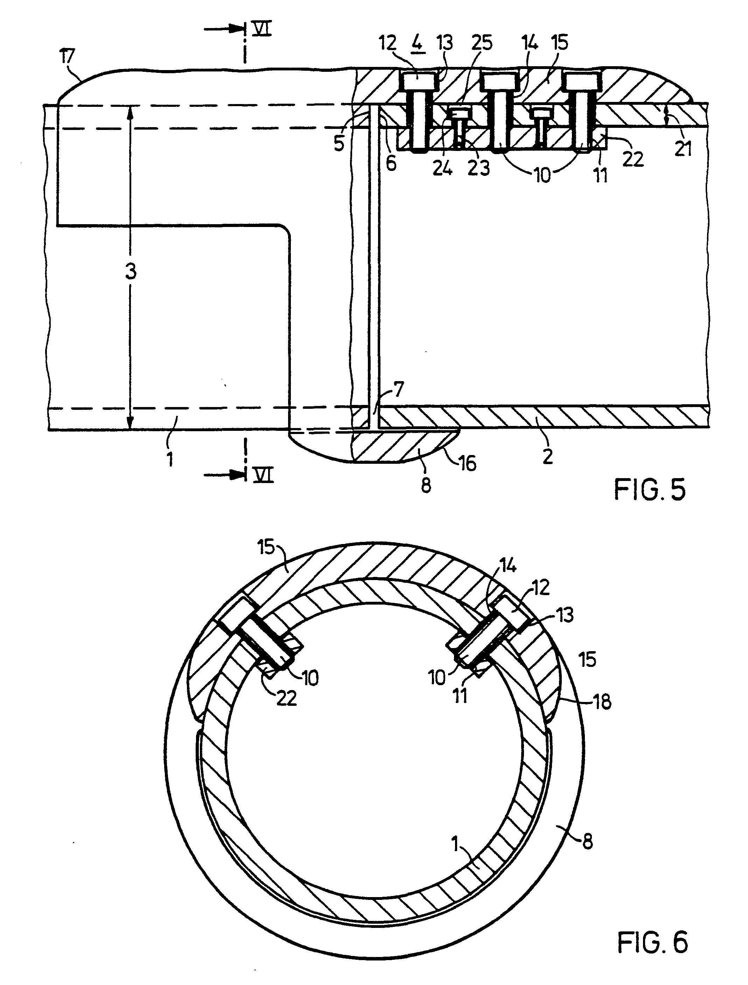

In den Figuren 5 und 6 ist eine Schraubverbindung 4 zwischen zwei Leitern 1 und 2 mit gleichem Außendurchmesser 3 aber verhältnismäßig geringe Wandstärke 21, die durch Pfeile angedeutet ist, dargestellt. Demzufolge würde nicht sichergestellt sein, daß eine Gewindebohrung in der Leiterwand eine genügend große Festigkeit ergibt. Deshalb sind die leistenförmigen Gegenstücke 22 aus einem Material größerer mechanischer Festigkeit als die Leiter vorgesehen, welche die Gewindebohrungen 11 für die Schrauben 10 aufnehmen. Diese leistenförmigen Gegenstücke 22 sind im Innern der hohlen Leiter 1 und 2 angeordnet. Zu ihrer Befestigung an den Leitern dienen gesonderte Befestigungsschrauben 23, die zwischen den Schrauben 11 angeordnet sind und deren Köpfe 24 ebenfalls in Ansenkungen 25 in den Leitern 1 und 2 so untergebracht sind, daß sie nicht über den Außendurchmesser der Leiter 1, 2 hinausragen.

**Patentansprüche**

1. Stromführende Schraubverbindung zwischen zwei rohrförmigen Leitern (1, 2) einer elektrischen Anlage, insbesondere einer metallgekapselten Hochspannungsschaltanlage mit einem flüssigen oder gasförmigen, isolierenden Medium höherer, dielektrischer Festigkeit als Luft bei Atmosphärendruck, die radial gerichtete Schrauben (10) und eine rohrförmige Abschirmung (8) aufweist, wobei die Schraubenköpfe (12) innerhalb der Außenfläche der Abschirmung (8) angeordnet sind, dadurch gekennzeichnet, daß die Abschirmung (8) sich in Längsrichtung über die Enden der beiden Leiter (1, 2), die Stoßstelle (7) zwischen ihnen überdeckend, erstreckt, und daß die Abschirmung (8) mit jedem Leiter (1, 2) über Schrauben (10) verbunden ist, die innerhalb eines Bereiches von maximal 180° des Umfanges der Abschirmung (8) liegen und deren Köpfe (12) sich innerhalb der Wandung (15) der Abschirmung (8) befinden.

2. Schraubverbindung nach Anspruch 1, dadurch gekennzeichnet, daß die Abschirmung (8)

längs des Umfanges unterschiedliche Längen aufweist.

3. Schraubverbindung nach Anspruch 1 oder 2, dadurch gekennzeichnet, daß die Abschirmung (8) in Längsrichtung zwei unterschiedliche Innendurchmesser (19, 20) aufweist und mit Leitern (1, 2) unterschiedlichen Außendurchmesser (19, 20) verbunden ist.

4. Schraubverbindung nach Anspruch 1, dadurch gekennzeichnet, daß die abschließenden Kanten (16, 17, 18) der Abschirmung (8) in Umfangs- und/oder Längsrichtung abgerundet sind.

5. Schraubverbindung nach einem der vorhergehenden Ansprüche, zwischen zwei hohlen Leitern, dadurch gekennzeichnet, daß die Schrauben (10) in einem im Innern der Leiter (1, 2) liegenden, gesonderten, die Gewindebohrungen (11) aufweisenden leistenförmigen Gegenstück (22) eingeschraubt sind.

6. Schraubverbindung nach Anspruch 5, dadurch gekennzeichnet, daß die Gegenstücke (22) jeweils an den Leiter (1, 2) angeschraubt sind, wobei die Befestigungsschrauben (23) der Gegenstücke (22) zwischen den Schrauben (10) der Schraubverbindung (4) in Längsrichtung in einer Schnittebene liegen.

7. Schraubenverbindung nach einem der vorstehenden Ansprüche, dadurch gekennzeichnet, daß die Schrauben (10) innerhalb von angenähert 90° des Umfanges der Abschirmung (8) liegen.

## Claims

1. A current-conducting screw connection between two tubular conductors (1, 2) of an electrical installation, in particular a metal-encased high-voltage switching installation comprising a liquid or gaseous insulating medium having a higher dielectric resistance than air at atmospheric pressure, which includes radially-directed screws (10) and a tubular screen (8), where the screw heads (12) are arranged inside the outer surface of the screen (8), characterised in that the screen (8) extends in the longitudinal directions over the ends of the two conductors (1, 2), covering the junction (7) between them, and that the screen (8) is connected to each conductor (1, 2) via screws (10) which are located inside a zone amounting to a maximum of 180° of the periphery of the screen (8) and whose heads (12) are located inside the wall (15) of the screen (8).

2. A screw connection as claimed in Claim 1, characterised in that the screen (8) differs in length along its periphery.

3. A screw connection as claimed in Claim 1 or 2, characterised in that in the longitudinal direction the screen (8) has two different internal diameters (19, 20) and is connected to conductors (1, 2) having different external diameters (19, 20).

4. A screw connection as claimed in Claim 1, characterised in that the terminating edges (16, 17, 18) of the screen (8) are rounded in the peripheral and/or longitudinal direction.

5. A screw connection as claimed in one of the preceding Claims, between two hollow conductors, characterised in that the screws (10) are screwed into a separate, strip-like backing piece (22) which is located inside the conductors (1, 2) and is provided with threaded bores (11).

6. A screw connection as claimed in Claim 5, characterised in that the backing pieces (22) are each screwed to the conductor (1, 2), where the fixing screws (23) of the backing pieces (22) are arranged between the screws (10) of the screw connection (4) in the longitudinal direction, in a sectional plane.

7. A screw connection as claimed in one of the preceding Claims, characterised in that the screws (10) are located within approximately 90° of the periphery of the screen (8).

## Revendications

1. Connexion conductrice de courant à vis entre deux conducteurs tubulaires (1, 2) d'une installation électrique, en particulier d'une installation de distribution haute tension à blindage métallique et à milieu isolant, liquide ou gazeux ayant une rigidité diélectrique supérieure à celle de l'air à la pression atmosphérique, du type comportant des vis (10) dirigées radialement ainsi qu'un blindage tubulaire (8), les têtes (12) des vis étant disposées à l'intérieur de la surface extérieure du blindage (8), caractérisée par le fait que ledit blindage (8) s'étend dans le sens longitudinal au-delà des extrémités des deux conducteurs (1, 2) en recouvrant la zone d'aboutement (7) de ces derniers, et que l'écran (8) est relié à chaque conducteur (1, 2) à l'aide de vis (2) qui se situent dans une zone maximale de 180° de la périphérie de l'écran (8) et dont les têtes (12) se trouvent à l'intérieur de la paroi (15) de l'écran (8).

2. Connexion à vis selon la revendication 1, caractérisée par le fait que l'écran (8) comporte, le long de la périphérie, des longueurs différentes.

3. Connexion à vis selon la revendication 1 ou 2, caractérisée par le fait que l'écran (8) présente, dans le sens longitudinal, deux diamètres intérieurs différents (19, 20) et qu'il est relié aux conducteurs (1, 2) ayant des diamètres extérieurs (19, 20) différents.

4. Connexion à vis selon la revendication 1, caractérisée par le fait que les bords d'extrémité (16, 17, 18) de l'écran (8) sont arrondis dans le sens périphérique et/ou dans le sens longitudinal.

5. Connexion à vis selon l'une des revendications précédentes, entre deux conducteurs creux, caractérisée par le fait que les vis (10) sont vissées dans une pièce antagoniste individuelle en forme de réglette et se situant à l'intérieur des conducteurs (1, 2).

6. Connexion à vis selon la revendication 5, caractérisée par le fait que chacune des pièces antagonistes (22) est fixée au conducteur (1, 2), les vis de fixation (23) des pièces antagonistes se situant, dans le sens longitudinal, dans un plan de coupe, entre les vis (10) de la liaison par vissage (4).

7. Connexion à vis selon l'une des revendications précédentes, caractérisée par le fait que les vis (10) se situent à l'intérieur d'un angle sensiblement égal à 90° de la périphérie de l'écran (8).

FIG.1

FIG.2

FIG. 3

FIG.4

FIG. 5

FIG. 6